# EUROPEAN PATENT SPECIFICATION

(11) **EP 1 242 462 B1**
(45) Date of publication and mention of the grant of the patent: **18.05.2005**
(21) Application number: 00981982.2
(22) Date of filing: 31.10.2000
(51) Int. Cl.: C08B 31/18

(54) **OXIDATION OF STARCH**
OXIDATION VON STÄRKE
OXYDATION D'AMIDON

(30) Priority: 29.11.1999 SE 9904309
(43) Date of publication of application: 25.09.2002
(73) Proprietor: SVERIGES STÄRKELSEPRODUCENTER, FÖRENING UPA, S-291 91 Kristianstad (SE)
(72) Inventor: LARSSON, Magnus, S-374 30 Karlshamn (SE); OSKARSSON, Jonas, S-291 92 Kristianstad (SE)
(74) Representative: Wiklund, Erik
(86) International application number: PCT/SE2000/002122
(87) International publication number: WO 2001/044304

(56) References cited:
- WO-A1-97/32903
- WO-A1-97/35890
- US-A- 4 590 265

## Description

### Field of the Invention

The present invention relates to the oxidation of starch. More specifically, the invention relates to a method for oxidising starch with ozone.

### Background Art

It is already known to oxidise starch. The oxidation is performed in particular with a view to producing starch derivatives. In the oxidation of starch, hydroxyl groups on the starch molecule are oxidised, for instance, into ketone groups, aldehyde groups or carboxyl groups. These groups can subsequently be used for inserting other functional groups, if desired.

The oxidation of starch can be carried out by means of different oxidising agents, such as hypochlorite, hydrogen peroxide or ozone. The most common oxidising agent is hypochlorite. It is, however, also known to oxidise starch with ozone, and the following documents are examples thereof.

WO 97/35890 discloses the oxidation of a starch suspension with ozone without catalyst at a pH of 1-10.5, at a temperature of 0-60°, at a starch concentration of 1-45% by weight, and for 10 min to 20 h. However, in all the Examples very long oxidation times of 5-8 h are used. In spite of the long oxidation times, only a low degree of carboxyl substitution (DScooh) of 0.001-0.007 is obtained in the starch. Surface-tension reducing agents can be added to improve the contact between the oxidising agent and the starch molecules. When adding acetic acid as surface-tension reducing agent and when using a suitable pH (3.0), the carboxyl substitution degree can thus be increased to 0.019. It is mentioned that the solubility of the ozone in the reaction medium can be increased by raising the pressure in the reactor vessel. However, it is not mentioned at all that the reaction rate can be increased or that the reaction yield can be improved by raising the pressure.

An oxidation method similar to that in WO 97/35890 is disclosed in WO 97/32903 which describes an oxidation method using ozone but also using a catalyst selected from bromine and iodine compounds. No mention is made of the use of increased pressure in the oxidation reaction.

WO 97/32902 discloses the oxidation of starch under conditions corresponding to those in WO 97/35890 and WO 97/32903, with the difference that the oxidation takes place in dry condition, i.e. the starch contains 25% by weight water at the most. Preferably, the oxidation reaction is effected in a fluidised bed.

The disadvantage of the prior-art methods for oxidising starch with ozone is that they are time-consuming and that the reaction yield is low. Time-consuming methods are not suited to be performed continuously, since a long residence time of the reactants requires large and unwieldy equipment. For a method to be suited to be performed continuously, it must be adapted to be carried out in a short time and in addition the reaction yield should be high, i.e. the method should be efficient. Consequently, there is a need for an improved method for oxidising starch with ozone, which can be performed in a short time and has a high reaction yield.

### Summary of the Invention

The present invention aims at eliminating or reducing the drawbacks of prior-art ozone oxidation methods and providing a method, which can be performed in a short time and/or with a high reaction yield.

The object of the invention is achieved by a method for oxidising starch with ozone, which is performed at an increased pressure.

More specifically, the invention provides a method for oxidising starch with ozone, an ozone-containing gas being contacted with a starch suspension, characterised in that the ozone-containing gas is contacted with the starch suspension at a positive pressure of 0.1-2.0 MPa.

Further features and advantages of the invention will appear from the description below and the appended claims.

### Detailed Description of the Invention

The expression "starch" as used herein refers to different types of starch, such as root starches, tuber starches, cereal starches and derivatives thereof. Usually, starch from potatoes, wheat or maize is utilised. In the invention, potato starch is a particularly preferred type of starch.

The oxidation reaction according to the invention is carried out in a pressure vessel, such as a reactor of autoclave type or a tube reactor. The oxidation reaction can be performed batchwise or continuously. A particular advantage of the method according the invention is that it is well suited to be performed continuously, owing to its efficiency, i.e. the oxidation reaction can be performed in a short time and with a high reaction yield. In practice, this constitutes a fundamental condition for the method to be industrially applicable.

In the reaction, the starch is present in the form of a suspension in a suspension medium, preferably water. The reason for this is that a reaction between gaseous ozone and powdered starch, i.e. a reaction in dry phase, is difficult to control and that the ozone tends to decompose in gaseous phase. The starch concentration in the suspension can vary within wide limits, and is preferably 1-45% by weight, more preferably 10-40% by weight, calculated on a dry matter basis of the total weight of the suspension. In the reaction, the ozone is present in gaseous form and contacted with the starch by being inserted into the starch suspension as finely dispersed bubbles.

As mentioned above, the oxidation reaction according to the invention is performed at a positive pressure of 0.1-2.0 MPa (1-20 bar), preferably 0.5-1 MPa, more preferably 0.6-0.8 MPa.

By performing the oxidation reaction according to the invention at a considerably increased pressure of 0.1-2.0 MPa, it has surprisingly been found that the reaction time for the oxidation of the starch can be reduced from being in the range of several hours according to prior-art technique to being in the range of a few minutes. Generally, the reaction time of the oxidation reaction according to the invention is in the range of 1 min to 2 h, preferably in the range of 1 min to 1 h, more preferably 1-10 min, and most preferably 1-5 min.

Furthermore, by performing the oxidation reaction according to the invention at a considerably increased pressure corresponding to a positive pressure of 0.1-2.0 MPa, it has surprisingly been found that the reaction yield is considerably improved compared with prior-art technique. Thus, the invention attains reaction yields in the range of 90%. The reaction yield is defined as (amount of supplied ozone - amount of unreacted ozone)/(amount of supplied ozone)x100%.

Moreover, it is preferred that carboxyl groups rather than carbonyl groups or aldehyde groups form in the oxidation. In the invention, it is thus desirable to attain the desired degree of carboxyl substitution (number of carboxyl groups per anhydroglucose unit) in the shortest possible time while using as little oxidising agent as possible. Even if the carboxyl substitution degree in the invention can vary within wide limits, as desired, it is generally preferably between 0.01 and 0.04, in particular preferably about 0.03. In the invention, it is possible to attain a carboxyl substitution degree of 0.04 in 10 min at the most. This indicates both a high reaction yield and good selectivity for oxidation to carboxyl groups. As an indication of the rapid oxidation reaction in the invention, it can be mentioned that a carboxyl substitution degree of 0.04 in 10 min is about 20-200 times faster than in the Examples of above-mentioned WO 97/35890.

The great reduction of the reaction time and the great increase of the reaction yield in the invention are surprising, also when considering the fact that the pressure raise leads to an improved possibility of contact between the starch (solid phase) and the ozone (gaseous phase).

To improve the contact between the ozone and the starch, thus allowing a faster and more efficient oxidation reaction, it is particularly preferred for the oxidation reaction according to the invention to be performed while agitating the reaction mixture. In this connection, agitation refers to mechanical agitation of the reaction mixture with a rotating agitator as well as to agitation of the reaction mixture with static agitators or shaking of the reaction mixture, for instance, mechanically or by sonication. It is particularly preferred to perform the oxidation reaction during powerful mechanical agitation using a rotating agitator at about 1000-2000 rpm.

To facilitate and improve the contact between the ozone and the starch suspension, the ozone is preferably supplied to the starch suspension in as finely dispersed a form as possible. Therefore the ozone is preferably introduced into the starch suspension through an atomising nozzle, which supplies the ozone-containing gas as finely dispersed, small bubbles to the starch suspension. Such nozzles for atomising gas are well-known to the person skilled in the art and do not need any further presentation.

To further improve the contact between the ozone and the starch, a surface-active substance is preferably added to the reaction medium. As a result, smaller ozone bubbles are provided and the starch molecules are brought into more intimate contact with the ozone. Surface-active substances are well-known to the person skilled in the art and do not need to be mentioned herein in more detail.

The pH of the starch suspension can vary within wide limits, but should preferably be 3-11.0, more preferably 4-10, yet more preferably 5-10, and most preferably 7-10. pH values above 11.0 are not preferred due to the risk of decomposition of the ozone, whereas pH values under 3 are not preferred due to the risk of hydrolysis of the starch. The pH value in the oxidation reaction seems to affect the selectivity of the oxidation as regards the formation of carboxyl groups in relation to carbonyl groups and aldehyde groups. Thus, the formation of carboxyl groups seems to be promoted by a neutral to alkaline pH, such as pH 5-10, in particular 7-10. Since the oxidation to carboxyl groups is particularly preferred in the invention, the pH value during the oxidation reaction is preferably adjusted so as to be in the range that promotes the formation thereof. Moreover, the pH value is preferably kept constant or at least substantially constant during the oxidation reaction.

The temperature of the oxidation reaction according to the invention is not particularly critical and can vary within wide limits. The temperature is preferably 5-80°C, more preferably 5-60°C, and yet more preferably 5-40°C. Temperatures below 5°C are not preferred as they slow down the reaction and due to the risk of freezing when the temperature approaches 0°C and the reaction medium is water. Temperatures above 80°C are not preferred since in that case the starch starts to dissolve.

The oxidising agent ozone is added to the reaction medium, i.e. the starch suspension, in the form of an ozone-containing gas. The ozone content in the ozone-containing gas can vary within wide limits and is preferably as high as possible. It is in particular preferred for the ozone concentration to be 3-15% by weight. The gas that contains the ozone can be freely selected from gases which do not have a negative influence on the oxidation reaction and is suitably selected from air or oxygen. It is in particular preferred to use oxygen as ozone-containing gas.

The oxidation method according to the invention can be carried out both without the use of a catalyst and with the use of a catalyst. As examples of usable catalysts for use in the invention, mention can be made of halogen-containing compounds, such as bromine- and iodine-containing compounds, for instance sodium bromide or sodium iodide, without limiting the invention to these catalysts.

The oxidised starch according to the invention can be used for the same purposes as conventional oxidised starch, for instance for producing starch derivatives, for use as binders when coating paper, fillers in the meat industry or for further treatment into other starch derivatives.

The invention will now be illustrated by some nonlimiting Examples.

In the Examples, experiments were performed with the oxidation of starch with ozone. The experiments were carried out in an autoclave reactor which is provided with an agitator and is of the type CMC 2040 from CRS Reactor Engineering AB, Sweden. The volume of the reactor was 2.1 litre. The reactor was coupled to an ozone generator of the type Ozonia LN 103, which produces ozone in gaseous form from oxygen. The concentration of ozone in the oxygen was 3-4% by weight. Between the ozone generator and the reactor, a pressure tank was arranged for intermediate storing of generated ozone at a pressure of about 0.6 MPa before being supplied to the reactor. In the experiments, the reactor was charged with starch suspended in water, after which the reactor was closed and ozone was fed from the intermediate storage tank by means of the positive pressure present in the intermediate storage tank. In some experiments, also a catalyst was charged into the reactor. Subsequently, the agitator in the reactor was activated and the reaction mixture was subjected to an oxidation reaction in the closed reactor for some time, after which the agitation was interrupted, the reactor evacuated and the reaction product withdrawn and analysed.

The pH of the reaction mixture was determined before and after the reaction. The pressure and the temperature were measured continuously.

The amount of supplied ozone was calculated on the basis of the known reactor volume, the pressure and the ozone content of the ozone-containing oxygen and the temperature. The amount of used ozone was calculated after the reaction had been completed, on the one hand, by allowing the gas, when evacuating the reactor, to pass a liquid which reduces the residual ozone, after which the residual amount was determined titrimetrically and, on the other hand, by determining the amount of unreacted ozone in the aqueous phase in the reactor by spectrophotometer. These two fractions of unreacted ozone were subsequently subtracted from the amount of ozone that was charged, which resulted in the amount of reacted ozone.

After withdrawal from the reactor, the oxidised starch was dewatered and washed with 10 parts by volume of distilled water, whereupon the starch was allowed to dry in ambient temperature and was analysed as to the degree of carboxyl substitution (DS).

### Example 1

In this experiment, 200 g (calculated as dry matter) potato amylopectin starch and 750 g distilled water were charged into the reactor. Together this resulted in a volume of 920 ml. The initial pH was 7.0 and the initial temperature was 20°C. Ozone was supplied from the intermediate storage tank at a pressure of 0.665 MPa, which corresponded to 824 mg ozone. The agitator was activated at 1700 rpm and the oxidation reaction was allowed to last for 12 min. The pH of the reaction mixture after the oxidation reaction (final pH) was 3.78 and its temperature was 38.0°C. The test results are shown in Table 1.

### Example 2

In this experiment, 200 g (dry matter) potato amylopectin starch and 750 g distilled water were charged into the reactor. Together this resulted in a volume of 920 ml. In addition, 2.5 g NaBr was charged as catalyst. The initial pH was 7.0 and the initial temperature was 18.7°C. Ozone was supplied from the intermediate storage tank at a pressure of 0.650 MPa, which corresponded to 805 mg ozone. The agitator was activated at 1700 rpm and the oxidation reaction was allowed to last for 12 min. The final pH of the reaction mixture was 4.82 and its temperature was 39.5°C. The test results are shown in Table 1.

### Example 3

In this experiment, 100 g (dry matter) potato amylopectin starch and 375 g distilled water were charged into the reactor. The initial pH was 7.0 and the initial temperature was 18.0°C. Ozone was supplied from the intermediate storage tank at a pressure of 0.64 MPa. The agitator was activated at 1700 rpm and the oxidation reaction was allowed to last for 3 min, after which the reactor was evacuated. New ozone was then supplied from the intermediate storage tank and the oxidation reaction continued for 5 min, whereupon the reactor was evacuated again and new ozone was supplied from the intermediate storage tank and the oxidation reaction continued for 5 min. In this manner, an oxidation reaction was carried out in three batches with a total ozone supply of 3120 mg. The reason why the oxidation reaction was performed in three batches is that it was not possible to supply the required amount of ozone in one single batch. The final pH of the reaction mixture was 2.80 and its temperature was 32.0°C. The test results are shown in Table 1.

### Example 4

The method according to Example 3 was repeated, but in addition 1.25 g NaBr was added as catalyst to the reactor. Furthermore, the reaction time was prolonged after the first ozone supply from 3 min to 5 min to obtain a more complete oxidation reaction. The total amount of ozone supplied during the experiment was 3112 mg. The final pH of the reaction mixture was 4.80 and its temperature was 32.0°C. The test results are shown in Table 1.

**Table 1**

| Example | Reacted O₃ (kg O₃/ton dry matter) | Residual O₃ in liquid (mg) | Residual O₃ in gas (mg) | Yield O₃ (%) | DS Carboxyl |
|---|---|---|---|---|---|
| 1 | 4.02 | 9.6 | 7.2 | 97.7 | 0.012 |
| 2 | 3.94 | 7.2 | 7.2 | 98.0 | 0.010 |
| 3 | 27.72 | 19.8 | 292 | 88.8 | 0.036 |
| 4 | 30.11 | 19.2 | 52.6 | 96.8 | 0.019 |

It appears from the results in Table 1 that oxidation of starch with ozone is a rapid reaction. Less than 10 min after the supply of ozone almost all the ozone has reacted. Yields of 96-98% as to the ozone can be obtained. The slightly inferior yield in Example 3 is due to the fact that the reaction time in the second batch (3 min) was a bit too short, which appears from the high content of residual ozone in the gas (292 mg) after the evacuation of the reactor.

### Examples 5-7

In these experiments, 100-120 g (dry matter) potato amylopectin starch, which had been slurried at 20°C in distilled water to a total volume of 500 ml, was charged into the reactor. As in Example 4, ozone-containing oxygen was supplied at a positive pressure of about 0.6 MPa from the intermediate storage tank in three batches with a reaction time of 5 min for each batch. After each reaction, the reactor was evacuated, which took about 3 min. In total, each experiment took about 40-45 min to carry out. During each experiment, the agitator was operated at 1800 rpm. The test results are shown in Table 2.

**Table 2**

| Example | Reacted O₃ (kg O₃/ton dry matter) | Residual O₃ in liquid (mg) | Residual O₃ in gas (mg) | Yield O₃ (%) | DS Carboxyl |
|---|---|---|---|---|---|
| 5 | 21.2 | 20 | 175 | 93.6 | 0.033 |
| 6 | 22.4 | 11 | 78 | 96.2 | 0.029 |
| 7 | 16.9 | 7 | 60 | 96.2 | 0.027 |

### Examples 8-10

In these experiments, 100-120 g (dry matter) potato amylopectin starch, which had been slurried at 20°C in distilled water to a total volume of 500 ml, was charged into the reactor. As in Examples 5-7, ozone-containing oxygen was supplied at a positive pressure of about 0.6 MPa from the intermediate storage tank in three batches with a reaction time of 5 min for each batch. After each reaction, the reactor was evacuated, which took about 3 min. In total, each experiment took about 40-45 min to carry out. During each experiment, the agitator was operated at 900 rpm. The test results are shown in Table 3.

**Table 3**

| Example | Reacted O₃ (kg O₃/ton dry matter) | Residual O₃ in liquid (mg) | Residual O₃ in gas (mg) | Yield O₃ (%) |
|---|---|---|---|---|
| 8 | 21.3 | 18 | 253 | 90.4 |
| 9 | 21.5 | 18 | 240 | 90.9 |
| 10 | 21.7 | 20 | 230 | 91.5 |

When comparing the results of Examples 8-10 in Table 3 with the results obtained in Examples 5-7, it appears that the ozone yield is lower in Examples 8-10. This can be explained by the lower number of revolutions of the agitator (900 rpm instead of 1800 rpm). Thus, it is clear that the agitation of the reaction mixture and the improved contact surface between the reactants thus obtained is important.

## Claims

1. A method for oxidising starch with ozone, an ozone-containing gas being contacted with a starch suspension, **characterised in that** the ozone-containing gas is contacted with the starch suspension at a positive pressure of 0.1-2.0 MPa.

2. A method as claimed in claim 1, **characterised in that** the positive pressure is 0.5-1.0 MPa.

3. A method as claimed in claim 1 or 2, **characterised in that** the oxidation reaction is carried out while agitating the suspension.

4. A method as claimed in any one of claims 1-3, **characterised in that** the ozone-containing gas is contacted with the suspension at a pH of 3-11.0.

5. A method as claimed in any one of claims 1-4, **characterised in that** the ozone-containing gas is contacted with the suspension at a temperature of 5-80°C.

6. A method as claimed in any one of claims 1-5, **characterised in that** the ozone concentration of the ozone-containing gas is 3-15% by weight.

7. A method as claimed in any one of claims 1-6, **characterised in that** the oxidation reaction is carried out for 1-10 min.

8. A method as claimed in any one of claims 1-7, **characterised in that** the suspension has a starch concentration of 1-45% by weight.

9. A method as claimed in any one of claims 1-8, **characterised in that** the oxidation reaction is carried out continuously.

## Patentansprüche

1. Verfahren zum Oxidieren von Stärke mit Ozon, wobei ein ozonhaltiges Gas mit einer Stärkesuspension in Kontakt gebracht wird, **dadurch gekennzeichnet, dass** das ozonhaltige Gas mit der Stärkesuspension bei einem Überdruck von 0,1-2,0 MPa in Kontakt gebracht wird.

2. Verfahren wie in Anspruch 1 beansprucht, **dadurch gekennzeichnet, dass** der Überdruck 0,5-1,0 MPa beträgt.

3. Verfahren wie in Anspruch 1 oder 2 beansprucht, **dadurch gekennzeichnet, dass** die Oxidationsreaktion durchgeführt wird, während die Suspension gerührt wird.

4. Verfahren wie in einem der Ansprüche 1-3 beansprucht, **dadurch gekennzeichnet, dass** das ozonhaltige Gas mit der Suspension bei einem pH von 3-11,0 in Kontakt gebracht wird.

5. Verfahren wie in einem der Ansprüche 1-4 beansprucht, **dadurch gekennzeichnet, dass** das ozonhaltige Gas mit der Suspension bei einer Temperatur von 5-80°C in Kontakt gebracht wird.

6. Verfahren wie in einem der Ansprüche 1-5 beansprucht, **dadurch gekennzeichnet, dass** die Ozonkonzentration des ozonhaltigen Gases 3-15 Gew.-% beträgt.

7. Verfahren wie in einem der Ansprüche 1-6 beansprucht, **dadurch gekennzeichnet, dass** die Oxidationsreaktion während 1-10 min durchgeführt wird.

8. Verfahren wie in einem der Ansprüche 1-7 beansprucht, **dadurch gekennzeichnet, dass** die Suspension eine Stärkekonzentration von 1-45 Gew.-% aufweist.

9. Verfahren wie in einem der Ansprüche 1-8 beansprucht, **dadurch gekennzeichnet, dass** die Oxidationsreaktion kontinuierlich durchgeführt wird.

## Revendications

1. Procédé d'oxydation de l'amidon par de l'ozone, un gaz contenant de l'ozone étant mis en contact avec une suspension d'amidon, **caractérisé en ce que** le gaz contenant de l'ozone est mis en contact avec la suspension d'amidon à une pression positive de 0,1 à 2,0 MPa.

2. Procédé selon la revendication 1, **caractérisé en ce que** la pression positive vaut 0,5 à 1,0 MPa.

3. Procédé selon la revendication 1 ou 2, **caractérisé en ce que** la réaction d'oxydation est effectuée tout en agitant la suspension.

4. Procédé selon l'une quelconque des revendications 1 à 3, **caractérisé en ce que** le gaz contenant de l'ozone est mis en contact avec la suspension à un pH de 3 à 11,0.

5. Procédé selon l'une quelconque des revendications 1 à 4, **caractérisé en ce que** le gaz contenant de l'ozone est mis en contact avec la suspension à une température de 5 à 80°C.

6. Procédé selon l'une quelconque des revendications 1 à 5, **caractérisé en ce que** la concentration en ozone dans le gaz contenant de l'ozone vaut 3 à 15 % en poids.

7. Procédé selon l'une quelconque des revendications 1 à 6, **caractérisé en ce que** la réaction d'oxydation est effectuée pendant 1 à 10 min.

8. Procédé selon l'une quelconque des revendications 1 à 7, **caractérisé en ce que** la suspension a une concentration en amidon de 1 à 45 % en poids.

9. Procédé selon l'une quelconque des revendications 1 à 8, **caractérisé en ce que** la réaction d'oxydation est effectuée en continu.
